# EUROPEAN PATENT APPLICATION

(11) **EP 1 641 255 A1**
(43) Date of publication of application: **29.03.2006**
(21) Application number: 05100273.1
(22) Date of filing: 18.01.2005
(51) Int. Cl.: H04N 5/64

(54) **Portable broadcast receiving set with main body and cover**

(30) Priority: 27.09.2004 JP 2004280011
(71) Applicant: KABUSHIKI KAISHA TOSHIBA, Tokyo (JP)
(72) Inventor: Shimoda, Kazuharu c/o Toshiba Corporation, Tokyo (JP)
(74) Representative: Henkel, Feiler & Hänzel

(57) **Abstract**

A TV receiver is provided with a main body having a display section to display a received image of digitalized terrestrial broadcast and operation buttons to perform various operations, and a cover section rotatively attached to the main body by a hinge. The hinge is provided with a cover support section connected to the cover section, an opening and closing rotation mechanism attached through an axis to the main body, and a hinge axis to rotatively support the cover support section and the opening and closing rotation mechanism. The cover section rotates relative to the main body around the opening and closing rotation mechanism attaching axis and the hinge axis parallel respectively to a vertical axis and a horizontal axis of the display section.

## Description

The present application is based on Japanese patent application No. 2004-280011, the entire contents of which are incorporated herein by reference.

### BACKGROUND OF THE INVENTION

### Field of the Invention

The present invention relates to a broadcast receiving set which is portable and provided with a main body and a cover section thereof, and in particular, to a broadcast receiving set in which an image displayed on a display screen can be seen through a cover section in a state where a main body is covered with the cover section and a good receiving state can be obtained without moving a display section.

### The Related Art of the Invention

In a conventional broadcast receiving set, for example, as shown in Japanese Unexamined Patent Publication No. 5 - 236397, a planar antenna covered with an opaque element and a liquid crystal television body having a television display screen are united to be folded in a base. The planar antenna performs a function of a cover for the liquid crystal television body and is coupled through a hinge to the base to be rotated in the horizontal direction and the vertical direction.

According to this construction, the planar antenna can be set in any direction and oblique angle optimal for receiving a satellite broadcast.

According to the conventional broadcast receiving set, however, the antenna must be always risen up in operation, so that radio waves can not be received, and the television display screen can not be seen, in a state where the antenna covers the liquid crystal television body. In addition, there is a case where the receiving sensitivity thereof is not sufficient, although it can be adjusted by rotating the antenna only in the horizontal and vertical directions.

In view of the above, there exists a need for a broadcast receiving set which overcomes the above-mentioned problems in the related art. The present invention addresses this need in the related art and also other needs, which will become apparent to those skilled in the art from this disclosure.

### SUMMARY OF THE INVENTION

It is an object of the present invention to provide a broadcast receiving set in which a display screen can be seen through a cover section from an outside of a main body even with the main body still covered with the cover section and an easy adjustment of an antenna can be performed.

According to a first aspect of the present invention, a broadcast receiving set comprises, a main body equipped with a display section to display a display image of a television broadcast or the like on a display screen, and a cover section for covering the main body, wherein the display image displayed on the display screen is seen through the cover section from an outside of the main body.

The main body may be formed of metal.

The broadcast receiving set may further comprise a visual angle control filter for controlling a visual angle of the display image displayed on the display screen.

The visual angle control filter may be attached to the cover section.

The visual angle control filter may be attached to a surface of the main body.

The cover section may comprise an antenna connected to a receiving section housed in the main body.

The antenna may comprise two antennas having different lengths with each other.

The broadcast receiving set may further comprise a mask section disposed in the cover section to cover the antenna.

The mask section may be made of painting. The cover section may be formed of a transparent element.

The main body may comprise an electromagnetic shielding structure.

According to a second aspect of the present invention, a broadcast receiving set, comprises a main body equipped with a display section to display a display image of a television broadcast on a display screen, a cover section for covering the main body, the cover section being formed of a transparent element through which the display image displayed on the display screen is seen from an outside of the main body and comprising an antenna connected to a receiving section housed in the main body, and an opening and closing rotation mechanism to rotatively attach the cover section to the main body so that the cover section is opened and closed.

The opening and closing rotation mechanism may be disposed between the main body and the cover section to support the cover section and the main body in a predetermined position so that the cover section and the main body are self-supported.

According to a third aspect of the present invention, a broadcast receiving set, comprises a main body equipped with a display section to display a display image of a television broadcast on a display screen, a cover section for covering the main body, the cover section comprising a transparent section through which the display image displayed on the display screen is seen from an outside of the main body, and an antenna positioned corresponding to a periphery of the display screen and connected to a receiving section housed in the main body, and an opening and closing rotation mechanism to rotatively support the cover section to the main body for opening and closing the cover section.

The transparent section may comprise a function of a visual angle control filter.

### Advantages of the Invention

According to a broadcast receiving set of the present invention, even if a main body is covered with a cover section, a display screen can be seen through the cover section from an outside of the main body and adjustment of an antenna can be easily performed.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The preferred embodiments according to the invention will be explained below referring to the drawings, wherein:

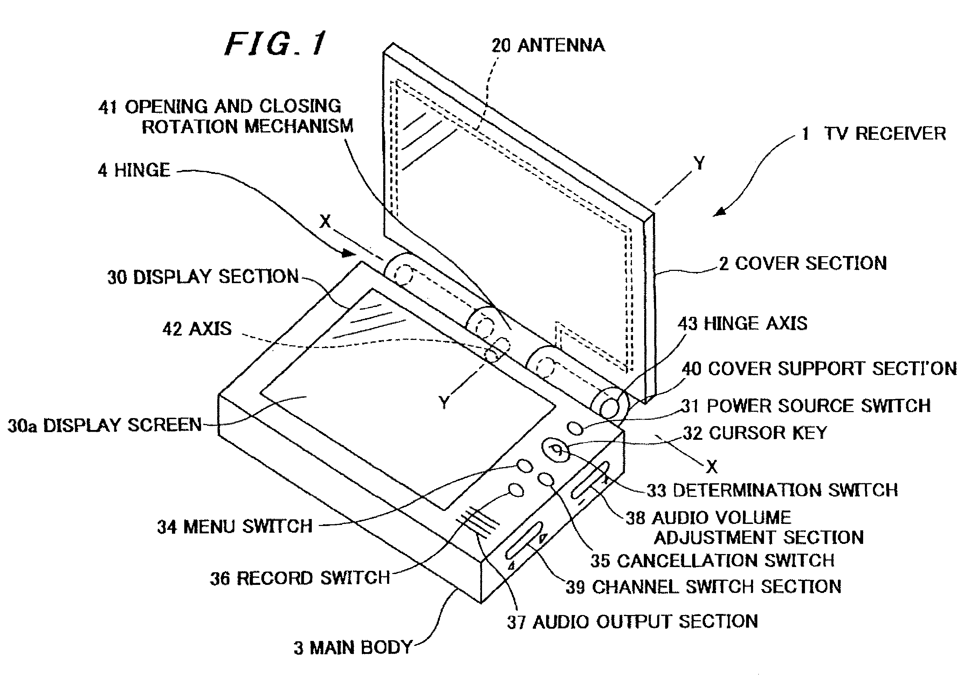

**FIG. 1** is a perspective view showing a television receiver as a broadcast receiving set in a first preferred embodiment of the present invention;
**FIG. 2** is a perspective view showing a state where a cover section is rotated to an axis;
**FIG. 3A** is an explanation view showing a state where a display section is closed;
**FIG. 3B** is an explanation view showing a state where a display section is seen caused by rotation of the cover section;
**FIG. 3C** is an explanation view showing a state where a TV receiver is self-supported;
**FIG. 4** is a block diagram showing a construction of a receiving system of a television receiver in the first preferred embodiment of the present invention;
**FIG. 5** is a view showing a cover section of a television receiver in a second preferred embodiment of the present invention;
**FIG. 6A** shows a television receiver in a third preferred embodiment where a cover section is opened;
**FIG. 6B** shows a television receiver in a third preferred embodiment of the present invention where a cover section is closed; and
**FIG. 7** is a perspective view showing a television receiver in a fourth preferred embodiment of the present invention.

### DETAILED DESCRIPTION OF THE PREFERRED EMBODIMENT

FIG**.** 1 is a perspective view showing a television receiver as a broadcast receiving set in a first preferred embodiment of the present invention. The television receiver (referred to as TV receiver hereinafter) 1 is provided with a main body 3 composed of a display section to visually display display images such as a picture of a digitalized terrestrial broadcast, and further a picture read from a memory card described later and an image of a photo and operation buttons to perform various operations, and a cover section **2** rotatively attached to the main body 3 by a hinge **4.**

The main body **3** is provided with a display section **30** to display received pictures or menus on a display screen **30a,** a power source switch **31** to switch on/off a power source inputted to the TV receiver **1,** a cursor key **32** to perform movement of a cursor displayed on the display screen **30a** or scroll views, a determination switch 33 to determine an action selected on the display screen 30a and perform the determined action, a menu switch **34** to display a menu view, a cancellation switch **35** to cancel the action selected by the determination switch **33,** a record switch **36** to store an image displayed on the display screen 30a, an audio output section **37** to output from a speaker an audible signal to which an audio signal of a television broad is transformed, an audio volume adjustment section **38** to adjust an audio volume level of the audible signal outputted from the audio output section **37,** and a channel switch section **39** to switch a receiving channel. The main body **3** is formed of metal such as aluminum or stainless steel.

The display section **30** is designed to display pictures or menus of the TV broadcast in color or black and white on the display screen 30a, and for example, a liquid crystal display is used as the display section **30,** but is not limited to it and other display devices may be used.

The cursor key **32** moves the cursor to select an action such as menus, readings, and records of the pictures or the images displayed on the display screen **30a,** and scrolls the view.

The menu switch **34** operates to display various menus such as adjustments of brightness, contrast and the like of the pictures or the images and setting of an on-timer on the display screen 30a.

The record switch **36** operates to store the pictures or the images displayed on the display screen **30a** in a memory card such as a SD (Secure Digital) memory card inserted in a memory card slot (not shown) . In case the memory card is not inserted, it is possible to select a memory housed in the main body 3 for storing it.

The cover section **2** is formed of a transparent element such as acrylic or ABS and the antenna **20** for TV broadcast receiving is located on a surface of the cover section **2** or in the vicinity of an inner peripheral edge, and is adapted to be able to cover the main body 3 as described later. Since the cover section **2** is formed of a transparent element, even if the cover section **2** is folded on the main body **3,** an image displayed on the display screen 30a can be seen through the cover section **2** from an outside of the main body **3.**

As the antenna 20, an antenna formed of a copper wire or a loop-like antenna made of a copper pattern formed on a transparent element is used, but not limited to these types and any planar antenna may be used. The antenna **20** is adapted to cover frequency bands of UHF broadcast.

The hinge **4** is provided with a cover support section **40** connected to the cover section **2,** an opening and closing rotation mechanism **41** rotatively attached through an axis **42** to the main body 3, and a hinge axis **43** to rotatively support the cover support section **40** and the opening and closing rotation mechanism **41.** The main body **3** and the cover section **2** are arranged to be respectively rotated by the axis **42** arranged in the Y-Y direction and the hinge axis **43** arranged in the X-X direction.

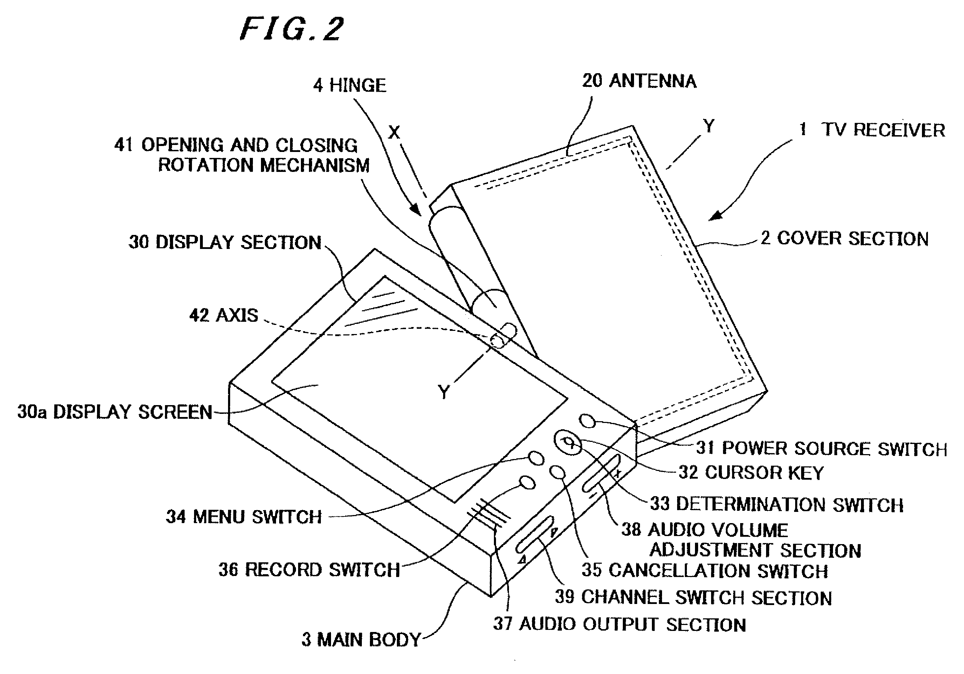

**FIGS- 2** and **3** is an explanation view showing a motion of a hinge. **FIG. 2** is a perspective view showing a state where the cover section **2** is rotated around the axis **42.** The cover section **2** can be rotated respectively in the clockwise and counterclockwise directions by **180º,** and can be secured at any position.

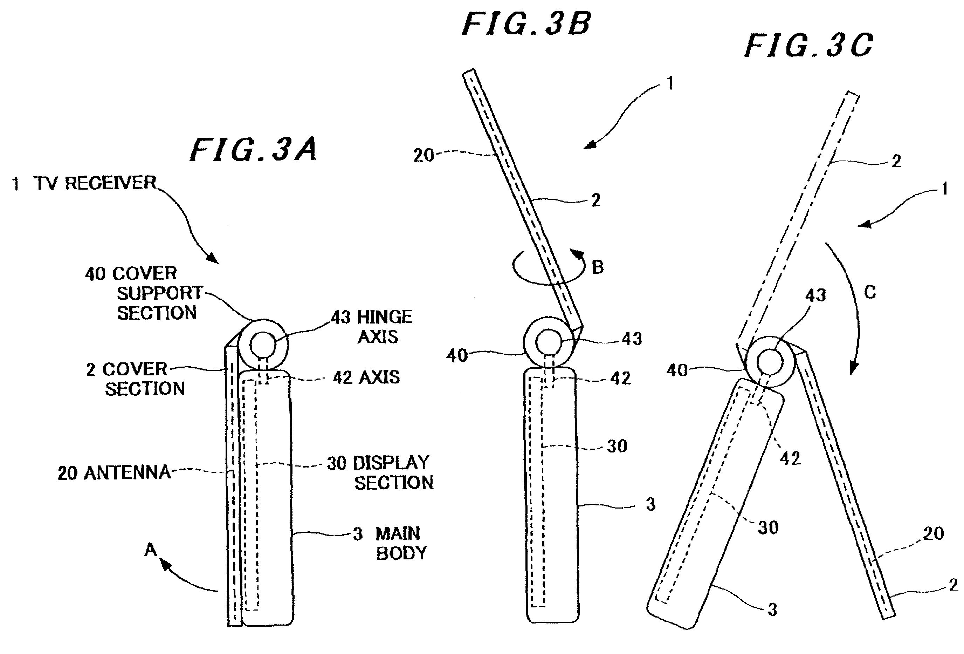

FIGS. 3A - 3C are an explanation view showing that the hinge **4** rotates around the hinge axis **43.** As shown in **FIG. 3A,** when the display section 3 is closed, the main body 3 and the cover section 2 are overlapped with each other. The cover section **2** is moved in the A direction from this state to be opened, and as shown in **FIG. 3B,** the cover section **2** rotates around the hinge axis **43** to the main body 3 for a user to see the display section **30.** Namely that is the state where the antenna is set up. In this state the cover section 2 rotates around the axis **42** in the B direction by approximately **180º** and then rotates around the hinge axis **43** in the C direction so that the cover section 2 comes close to the display section **3.** At this moment, when the main body 3 and the cover section **2** are placed on a plane such as a desk, as shown in FIG. 3C the TV receiver 1 is self-supported, do not fall down, and is placed vertically.

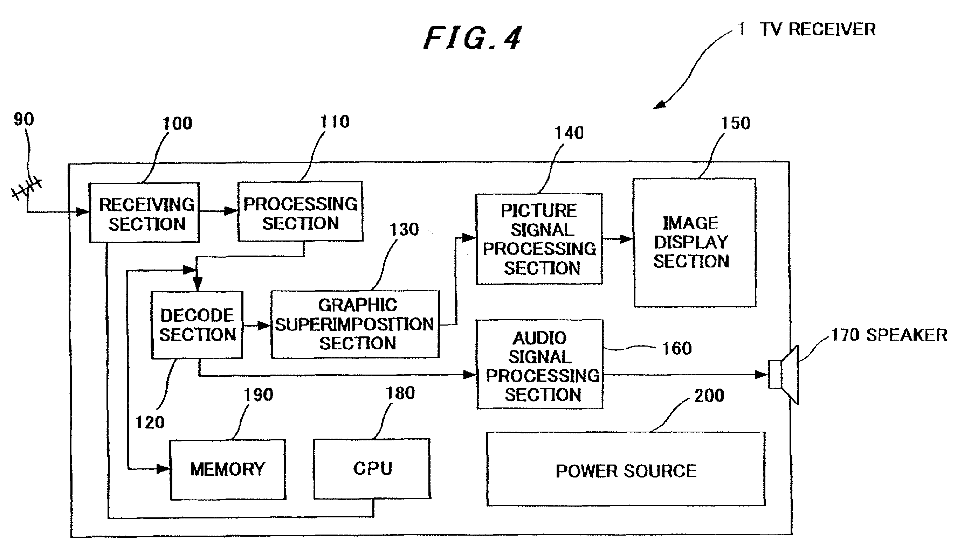

FIG. 4 is a block diagram showing an arrangement of a receiving system of the TV receiver 1 in the first preferred embodiment of the present invention. The TV receiver 1 is provided with a receiving section **100** to select a digital satellite broadcast received by an antenna **90,** a TS (Transport Stream) processing section **110** to perform Demux processing to the TS of the digital satellite broadcast selected by the receiving section **100,** a decode section **120** to perform a decode processing to an output signal of the TS processing section **110,** a graphic superimposition section **130** to superimpose a predetermined graphic to an output signal of the decode section **120,** a picture signal processing section **140** to perform picture processing of a graphic-superimposed signal, an image display section **150** to display a picture signal from the picture signal processing section **140,** an audio signal processing section **160** to output an audio signal to a speaker 170 by performing a decode processing of audio compression of AC **3** or the like, a CPU **180** to control each section of the TV receiver **1,** a memory **190** such as a semiconductor, a DVD, a HDD, and a VTR, and a power source **200** to supply power to each section of the TV receiver **1** by being controlled by the CPU **180.**

The following effects are obtained according to the TV receiver 1 in the first preferred embodiment of the present invention.
(A) Since the cover section **2** is formed of a transparent element, even if the main body 3 is covered with the cover section 2, an image of a picture of a digital terrestrial broadcast displayed on the display screen 30a can be seen.
(B) When the main body 3 is covered with the cover section 2, since the cover section 2 performs a function of a cover of the display section **30,** an erroneous operation of each operation switch is prevented, and the display section ***30** and various switches can be protected from dirt or intrusion of water components.
(C) Since the antenna 20 is disposed in the cover section 2, it is not necessary to prepare an antenna separately. And since no projecting element is present on an apparatus surface, the appearance is excellent.
(D) Since the cover section 2 is rotated to the axis **42** of the hinge **4,** a polarized face can be changed. Accordingly a user can adjust the antenna 20 to a good receiving state without changing a direction of the main body **3.**
(E) Since the cover section **2** becomes a stand of the TV receiver 1 by changing an opening and closing angle and a rotation angle of the cover section **2,** the pictures and the images can be seen with the TV receiver 1 being self-supported on a desk or the like without holding the main body **3** with a user's hand.
(F) Since the main body 3 is formed of metal, radiant noises or the like such as high-frequency digital noises generated inside the main body 3 can be sheltered not to be leaked to an outside, and it is prevented that the radiant noises wrap around the antenna. Thereby a good receiving sensitivity can be obtained by restricting a receiving sensitivity deterioration of the antenna 20 caused by the noises of the antenna 20 disposed in the cover section **2.** And the antenna **20** can be protected from an external electromagnetic wave.

Note that it is explained that in the first preferred embodiment the loop-like antenna **20** is disposed, but for example, a rod-like rod antenna may be used as an alternative antenna, and further, the rod antenna may be used as a stand of the TV receiver 1.

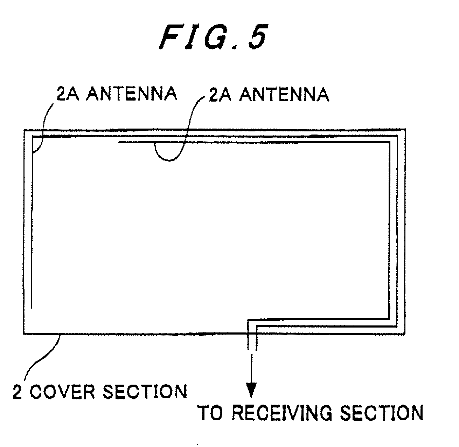

FIG. 5 is a view showing a cover section of a TV receiver in a second preferred embodiment of the present invention. Note that in the following explanation, components and functions identical to those in the first preferred embodiment are referred to as identical reference numerals.

The cover section 2 differs from the cover section **2** in the first preferred embodiment in that an antenna **20A** is formed to be longer than an antenna 20B . For example, the antenna **20A** covers low frequency bands of UHF broadcast, and the antenna **20B** covers high frequency bands thereof.

According to the second preferred embodiment, since the length of the antenna **20A** is different from the length of the antenna 20B, this preferred embodiment can be applied not only to UHF broadcast, but also to various frequency bands.

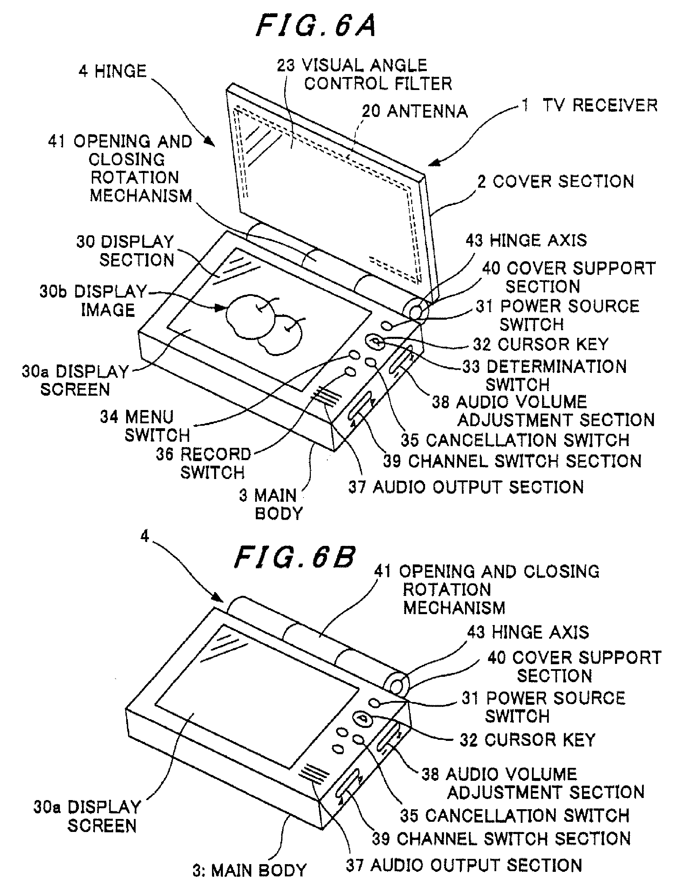

FIG. 6A shows a TV receiver in a third preferred embodiment of the present invention in a first state where the cover section is opened. **FIG. 6B** shows a TV receiver in a third preferred embodiment of the present invention in a second state where the cover section is closed. This TV receiver 1 is, as shown in FIG. 6A, provided with a visual angle control filter **23** disposed in the cover section 2, whereby a visual scope to a display image displayed on the display screen 30a is limited. FIG. 6A shows a state where the display image 30b displayed on the display screen 30a can be seen.

FIG. 6B shows, on the other hand, a state where, when the cover section 2 is closed, the display image 30b on the display screen 30a can not be seen or is difficult to be seen from the same direction with FIG. 6A. However, even in this state, the display image 30b can be seen from the front direction of the display screen 30a.

According to the above-mentioned third preferred embodiment, since the visual angle control filter 23 is disposed in the cover section 2, even in a situation where a person is near a user, it is possible to make it difficult for the person to see the display image 30b displayed on the display screen 30a.

Note that it is explained that the visual angle control filter 23 is disposed in the cover section 2 in the third preferred embodiment, but the visual angle control filter 23 and the cover section 2 maybe disposed separately. For example, the visual angle control filter 23 may be attached on the surface of the main body 3. In this case it is preferable that the visual angle control filter 23 is detachably disposed to cover the display screen 30a only, not to obstruct operability of each switch.

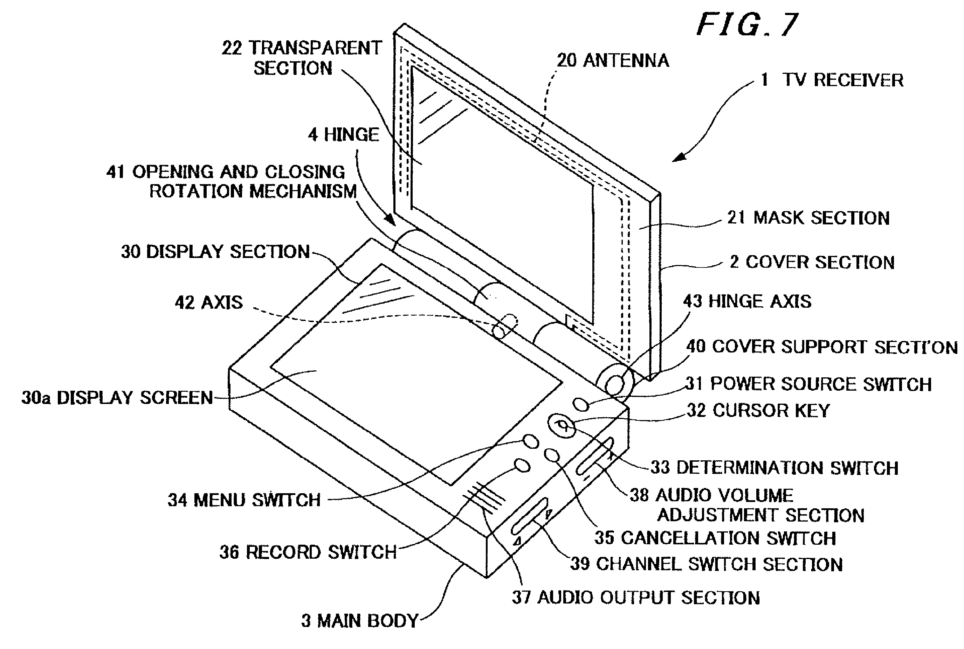

FIG. 7 is a perspective view showing a TV receiver in a fourth preferred embodiment. The TV receiver 1 differs from the first preferred embodiment in that a mask section 21 is formed to cover the antenna 20 disposed in the cover section 2.

A transparent section 22 is formed in the cover section 2 so that a user can see the display section 30 in a state where the cover section **2** covers the surface of the main body 3, and a mask section **21** is formed by painting on the portions other than the transparent section **22.** Note that the mask section **21** may be formed of, for example, a colored plastic element or a metallic element, other than the painting.

According to the above-mentioned fourth preferred embodiment, since the mask section **21** to cover the antenna **20** disposed in the cover section **2** is formed, a complicated appearance caused by various switches to be seen is improved to provide a neat appearance.

Note that it is explained that the mask section **21** is formed by the painting in the cover section **2** in the fourth preferred embodiment, but the cover section **2** and the mask section **21** may be separable. For example, when a color or a design of the mask section **21** can be changed arbitrarily based upon a user's preference, the TV receiver **1** can have fanciness, which enhances a user's satisfaction as his or her property for individuality.

And the transparent section **22** disposed in the cover section 2 may be detachable. Based upon this construction, in case the transparent section **22** is damaged, replacement of the transparent section **22** can be made without replacing the entire cover section **2,** which can reduce part replacement costs.

And the detachable transparent section **22** may be a transparent section **22** having the function of the visual angle control filter **23** explained in the third preferred embodiment. In this case, the transparent section **22** may be provided at any time as a component which can be attached arbitrarily based upon a user's preference. And a colored filter may be attached as an alternative to the transparent section **22.** And the cover section **2** may be used in a state of removing the transparent section **22.**

In each of the above-mentioned preferred embodiments, the arrangement of the TV receiver that receives digitalized terrestrial broadcast is explained, but a TV receiver that receives other types of broadcast other than the digitalized terrestrial broadcast may be used.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

## Claims

1. A broadcast receiving set, comprising:
a main body equipped with a display section to display a display image of a television broadcast on a display screen; and
a cover section for covering the main body, wherein:
the display image is seen through the cover section from an outside of the main body.

2. The broadcast receiving set according to claim 1, wherein:
the main body is formed of metal.

3. The broadcast receiving set according to claim 1, further comprising:
a visual angle control filter for controlling a visual angle of the display image displayed on the display screen.

4. The broadcast receiving set according to claim 3, wherein:
the visual angle control filter is attached to the cover section.

5. The broadcast receiving set according to claim 3, wherein:
the visual angle control filter is attached to a surface of the main body.

6. The broadcast receiving set according to claim 1, wherein:
the cover section comprises:
an antenna connected to a receiving section housed in the main body.

7. The broadcast receiving set according to claim 6,
wherein:
the antenna comprises two antennas having different lengths with each other.

8. The broadcast receiving set according to claim 6, further comprising:
a mask section disposed in the cover section to cover the antenna.

9. The broadcast receiving set according to claim 8, wherein:
the mask section is made of painting.

10. The broadcast receiving set according to claim 6, wherein:
the cover section is formed of a transparent element.

11. The broadcast receiving set according to claim 10, wherein:
the main body comprises an electromagnetic shielding structure.

12. The broadcast receiving set according to claim 1 further comprising:
an opening and closing rotation mechanism to rotatively attach the cover section to the main body so that the cover section is opened and closed;and
wherein the cover section is formed of a transparent element,and comprises an antenna connected to a receiving section housed in the main body.

13. The broadcast receiving set according to claim 12, wherein:
the opening and closing rotation mechanism is disposed between the main body and the cover section to support the cover section and the main body in a predetermined position so that the cover section and the main body are self-supported.

14. The broadcast receiving set according to claim 1 further comprising:
an opening and closing rotation mechanism to rotatively support the cover section to the main body for opening and closing the cover section;and
wherein the cover section comprising a transparent section, and an antenna positioned corresponding to a periphery of the display screen and connected to a receiving section housed in the main body.

15. The broadcast receiving set according to claim 14, wherein:
the transparent section comprises a function of a visual angle control filter.
